# EUROPÄISCHE PATENTANMELDUNG

(11) **EP 4 517 594 A1**
(43) Veröffentlichungstag der Anmeldung: **05.03.2025**
(21) Anmeldenummer: 23193948.9
(22) Anmeldetag: 29.08.2023
(51) Int. Cl.: G06N 3/082

(54) **VERFAHREN ZUM TRAINIEREN EINES KÜNSTLICHE-INTELLIGENZ-SYSTEMS**

(71) Anmelder: Siemens Aktiengesellschaft, 80333 München (DE)
(72) Erfinder: SCHALL, Daniel, 2020 Hollabrunn (AT)
(74) Vertreter: Siemens Patent Attorneys

(57) **Zusammenfassung**

Es wird ein Verfahren zum Trainieren eines Künstliche-Intelligenz-Systems zum Anonymisieren von Daten vorgeschlagen, mit den Schritten:
a. Trainieren eines ersten Autoencoders des Künstliche-Intelligenz-Systems und eines zweiten Autoencoders des Künstliche-Intelligenz-Systems mit Trainingsdaten, wobei
i. Die Trainingsdaten als Eingabedaten für den ersten Autoencoder verwendet werden, und wobei
ii. Ausgabedaten des ersten Autoencoders als Eingabedaten des zweiten Autoencoders verwendet werden,

b. Ermitteln eines Rekonstruktionsfehlers zwischen den Trainingsdaten und Ausgabedaten des zweiten Autoencoders, und
c. Beenden des Trainings, wenn ein Maß für die Größe des Rekonstruktionsfehlers einen vorgegebenen Wert unterschreitet.

## Beschreibung

Die Erfindung betrifft ein Verfahren zum Trainieren eines Künstliche-Intelligenz-Systems, kurz KI-Systems, zum Anonymisieren von Daten. Die Erfindung betrifft weiter ein Verfahren zum Trainieren einer Künstliche-Intelligenz-Anwendung, insbesondere einer Machine-Learning-Anwendung.

Machine-Learning-Algorithmen, abgekürzt ML-Algorithmen, also Algorithmen des maschinellen Lernens, basieren allgemein darauf, dass Verfahren der Statistik verwendet werden, um eine Datenverarbeitungsanlage derart zu trainieren, dass diese eine bestimmte Aufgabe ausführen kann, ohne dass diese ursprünglich explizit hierzu programmiert wurde. Das Ziel des maschinellen Lernens besteht dabei darin, Algorithmen zu konstruieren, die aus Daten lernen und Vorhersagen treffen können. ML-Anwendungen stellen eine Untergruppe von KI-Anwendungen ("Künstliche Intelligenz") dar. Allgemein stehen hierbei und im Folgenden die Abkürzungen "KI" für "Künstliche Intelligenz", "AI" für den entsprechenden englischen Begriff "artificial intelligence" und "ML" für "Maschinelles Lernen" oder den entsprechenden englischen Begriff "machine learning".

Vor dem Einsatz beziehungsweise der Anwendung derartiger Algorithmen des maschinellen Lernens werden diese dabei basierend auf den jeweiligen Anwendungsfall kennzeichnenden Trainingsdaten trainiert, wobei beispielsweise automatisch Gewichte innerhalb des Algorithmus des maschinellen Lernens derart angepasst werden, dass der Algorithmus des maschinellen Lernens zunehmend in der Lage ist, Beziehungen zwischen Features und Vorhersagen beziehungsweise Eingabedaten und entsprechenden Ausgabedaten abzubilden.

In letzter Zeit werden vermehrt Cloud-basierte Strukturen für die Speicherung, aber auch für die Analyse von Daten verwendet. In der Regel werden bei Cloud-basierten ML- und KI-Anwendungen ("Maschinelles Lernen"-Anwendungen und "Künstliche Intelligenz"-Anwendungen, engl. auch "machine learning" und "artificial intelligence") alle Rohdaten in die Cloud übertragen und in einer optimierten Datenbank (z. B. in einem Datei- oder Objektspeicher) gespeichert. KI-Modelle werden dann auf der Grundlage dieser Daten trainiert, indem die Rohdaten abgerufen und die ML-Algorithmen auf optimierter Rechenhardware ausgeführt werden. Kommt es zu einem Datenleck (z. B. durch die unbeabsichtigte Verwendung falscher Sicherheitsberechtigungen für einen Bucket), können sensible Daten wie beispielsweise Bilder von fehlerhaften Werkstücken ins Internet gelangen. Dies kann zu einem enormen Reputationsverlust für das Unternehmen führen, dessen Daten nach außen gedrungen sind. Ebenfalls besteht weiteres Missbrauchspotential durch solche Daten, die nicht autorisiert downloadbar oder auf sonstigem Wege abrufbar sind.

Zur Vermeidung der oben beschriebenen Möglichkeit von Datenlecks ist es beispielsweise möglich, auf die Verwendung einer Cloud-basierten Infrastruktur für sensible Daten zu verzichten. Dabei werden aber ebenso die Vorteile der elastischen Skalierungsmöglichkeiten eines Cloud-basierten Computer-Clusters aufgegeben.

Eine weitere Möglichkeit besteht darin, eine Verschlüsselung des Speichers bzw. der Rohdaten vorzunehmen, um einen Schutz sensibler Daten zu gewährleisten. Abgesehen von bekannten weiteren Problemen einer solchen Methode ist es dabei in der Regel so, dass der Cloud-Anbieter die Verschlüsselungsschlüssel verwaltet. Es werden somit sicherheitsrelevante Prozesse zwangsweise aus der Hand gegeben, was zumindest theoretisch zu weiteren Risikofaktoren bezüglich der Möglichkeit für unautorisierte Zugriffe auf sensible Daten führen kann.

Die Aufgabe der vorliegenden Erfindung besteht darin, eine Möglichkeit anzugeben, die Nutzung einer Cloud-basierten Infrastruktur beim Trainieren von ML- und KI-Anwendungen gegen unberechtigte Zugriffe auf verwendete Daten abzusichern.

Erfindungsgemäß wird ein Verfahren zum Trainieren eines KI-Systems zum Anonymisieren von Daten zur Verfügung gestellt, welches es ermöglicht, einen Datenaustausch mit einer Cloudbasierten Infrastruktur im Hinblick auf unbefugten Zugriff auf transferierte Daten durch Dritte sicherer zu gestalten. Es wird weiterhin zur Lösung der Aufgabe ein Computerprogramm sowie ein maschinenlesbares Speichermedium zur Verfügung gestellt.

Das erfindungsgemäße Verfahren umfasst grundsätzlich folgende Schritte:
a. Trainieren eines ersten Autoencoders des KI-Systems und eines zweiten Autoencoders des KI-Systems mit Trainingsdaten, wobei
   i. Die Trainingsdaten als Eingabedaten für den ersten Autoencoder verwendet werden, und wobei
   ii. Ausgabedaten des ersten Autoencoders als Eingabedaten des zweiten Autoencoders verwendet werden,
b. Ermitteln eines Rekonstruktionsfehlers zwischen den Trainingsdaten und Ausgabedaten des zweiten Autoencoders, und
c. Beenden des Trainings, wenn ein Maß für die Größe des Rekonstruktionsfehlers einen vorgegebenen Wert unterschreitet.

Es ist klar, dass dem erfindungsgemäßen Verfahren die entsprechenden Trainingsdaten und/oder Ausgangs-Modelle für die Autoencoder bereitgestellt werden.

Das erfindungsgemäße Verfahren kann beispielsweise wie folgt ausgeführt werden: Ein Originalbild oder ein anderer Satz von Rohdaten wird ersten Autoencoder als Trainingsdatensatz zur Verfügung gestellt. Der Autoencoder kann dabei insbesondere eine Art künstliches neuronales Netz sein, das zum Erlernen effizienter Kodierungen von ungekennzeichneten Daten verwendet werden kann (unüberwachtes Lernen). Ein Autoencoder erlernt in der Regel zwei Funktionen: eine Kodierungsfunktion, die die Eingabedaten umwandelt, und eine Dekodierungsfunktion, die die Eingabedaten anhand der kodierten Darstellung neu erstellt. Der Autoencoder lernt eine effiziente Darstellung (Kodierung) für einen Datensatz, typischerweise zur Dimensionalitätsreduktion. Die Repräsentation des dimensionsreduzierten Datensatzes erfolgt dabei in einem so genannten latenten Raum (entl. "latent space"), welcher auch als "bottleneck" bezeichnet werden kann. Das KI-System kann ein ML-System sein.

Der erste Autoencoder beinhaltet wiederum den ersten Encoder, den ersten latenten Raum und den zweiten Decoder. Der Trainingsdatensatz kann durch den ersten Encoder und durch den ersten latenten Raum an den ersten Decoder geschickt werden. In einem frühen Stadium des Lernprozesses wird der Rekonstruktionsfehler (die Differenz zwischen dem Originalbild und dem rekonstruierten Bild, bzw. die Differenz zwischen dem originalen Datensatz und dem rekonstruierten Datensatz) hoch sein, da der erste Autoencoder noch keine ausreichende Darstellung des Datensatzes bzw. des Bilds gelernt hat.

Das rekonstruierte Bild bzw. der rekonstruierte Datensatz können alsdann durch den zweiten Autoencoder, welcher ebenso wie der erste Autoencoder einen zweiten Encoder, einen zweiten latenten Raum und einen zweiten Decoder beinhaltet, geschickt und mit dem ursprünglichen Eingabebild bzw. mit dem ursprünglichen Datensatz, der in den ersten Autoencoder eingegeben wurde, verglichen werden. Der Rekonstruktionsfehler kann mit der Funktion dist(), die beispielsweise aus der Programmiersprache R bekannt ist, gemessen werden. Sobald der Abstand hinreichend klein ist wird das Training abgebrochen. Das Abbruchkriterium für das Training des ersten Autoencoders und des zweiten Autoencoders kann also auf dem Rekonstruktionsfehler des zweiten Autoencoders basieren oder von diesem Rekonstruktionsfehler gebildet werden. Der erste Autoencoder und der zweite Autoencoder können gemeinsam bzw. aufeinander aufbauend trainiert werden. Der erste Autoencoder ist von vornherein nicht in der Lage, eine perfekte Darstellung jedes Eingabebildes im Datensatz zu erstellen. Stattdessen wird er einen verrauschten Datensatz erzeugen, der von dem zweiten Autoencoder entschlüsselt werden muss. Der zweite Autoencoder lernt daher, den ursprünglichen Datensatz aus verrauschten Bildern zu rekonstruieren.

Das zur Verfügung gestellte Verfahren hat den Vorteil, dass die Anonymisierung von Daten oder Datensätzen energie- und rechenleistungseffizient erfolgen kann. Weiterhin kann der Ansatz des zur Verfügung gestellten Verfahrens in eine ML-Pipeline eingebettet werden. Es ist dann keine separate Anwendung, beispielsweise zur Verschlüsselung oder für eine andere Art der Anonymisierung, erforderlich. Weiterhin können Bandbreite und Speicherplatz eingespart werden, da Daten, die an die cloudbasierte Infrastruktur zur Weiterverarbeitung übertragen werden sollen, in geringerer Auflösung übertragen werden können. Dies gilt sowohl für Bilddaten, für die die Bezeichnung "Auflösung" wörtlich genommen werden kann, als auch für sonstige Daten, die nach der Anonymisierung typischerweise einen geringeren Speicherbedarf aufweisen.

Unter dem Anonymisieren von Daten kann dabei insbesondere ein Vorgang verstanden werden, der Daten derart modifiziert, dass die Nutzbarkeit der anonymisierten Daten für Dritte vermindert wird. Das Deanonymisieren ist der umgekehrte Vorgang, bei dem die ursprünglichen Daten möglichst vollständig rekonstruiert werden. Die Ursprungsdaten und die zunächst anonymisierten und dann deanonymisierten Daten sind dabei im Regelfall nicht identisch, da ein Verlust an Informationsgehalt auftreten kann.

Das erfindungsgemäße Verfahren erzeugt Daten bzw. ein Modell, welche beispielsweise dazu verwendet werden können, ein technisches Gerät zu betreiben. Im Betrieb können folglich die erhaltenen Daten, welche innerhalb eines vorgegebenen, zulässigen Rekonstruktionsfehlers liegen, dazu verwendet werden, ein Gerät mit einer Steuervorrichtung anzusteuern oder Daten von einem Gerät auszulesen und entsprechend auszuwerten, wie beispielsweise für eine Rekonstruktion von Messdaten, wie zuvor anhand von Bilddaten beschrieben.
Es ist klar, dass dem erfindungsgemäßen Verfahren Betriebsdaten zum Betrieb des technischen Geräts bereitgestellt werden bzw. von einem entsprechenden Sensormittel erfasst werden.
Mit anderen Worten wird im erfindungsgemäßen Verfahren der erste Autoencoder des KI-Systems mithilfe eines ersten Rechnersystems, wie einer Steuervorrichtung, dazu verwendet, ein mit dem KI-System verbundenes technisches Gerät zu betreiben.

Weiterhin ermöglicht es das erfindungsgemäße Verfahren, dass der Besitzer der Daten die volle Kontrolle über den Datensatz behält, da der Datensatz ohne das Deanonymisierungsmodell nutzlos ist. Wenn die Daten beispielsweise aus Bilddaten oder sonstigen Messdaten bestehen, so besteht der Datensatz in der Cloud aus unscharfen Bildern oder unzureichend abgetasteten Datenpunkten. So lange das Deanonymisierungsmodell nicht parallel zu den vertraulichen Daten abgehört oder auf sonstigem Wege an nicht autorisierte Nutzer gelangt, können die anonymisierten Daten nicht sinnvoll genutzt werden. Der Inhalt der Daten bleibt also sicher und kann von Dritten nicht rekonstruiert werden.

In einer vorteilhaften Ausgestaltung weisen der erste Autoencoder und der zweite Autoencoder jeweils ein Encodermodul und ein Decodermodul auf. Es können so bereits gut bekannte Prinzipien und Softwaremodule für die Ausführung des Verfahrens genutzt werden.

Es ist mit Vorteil möglich, dass zum Bestimmen des Rekonstruktionsfehlers eine dist()-Funktion verwendet wird. Die dist()-Funktion kann beispielsweise die dist()-Funktion der Programmiersprache R sein. Auch hier bietet es sich an, bereits bekannte und erprobte Bausteine zu nutzen, um den Gesamtaufwand bei der Durchführung des erfindungsgemäßen Verfahrens zu reduzieren.

Gemäß einer Ausführungsform wird das Verfahren zum Trainieren eines KI-Systems zum Anonymisieren von Daten auf einer Edge Device ausgeführt. Unter einer Edge Device kann dabei insbesondere ein Gerät, das einen Zugangspunkt zu den Kernnetzen von Unternehmen oder Dienstanbietern darstellt, verstanden werden. Beispiele hierfür sind Router, Routing-Switches, integrierte Zugangsgeräte (IADs), Multiplexer und eine Vielzahl von MAN- (Metropolitan Area Network) und WAN-(Wide Area Network) Zugangsgeräten. Edge-Geräte können auch Verbindungen zu Betreiber- und Dienstanbieternetzen herstellen. Die Edge Device kann direkt und somit auf sichere Weise mit der Datenquelle, welche die Rohdaten liefert, verbunden sein. Diese Datenquelle kann beispielsweise eine Kamera sein, die Bilder zur Überwachung der Qualität eines produzierten Produkts liefert. Andere Datenquellen sind aber natürlich ebenso möglich. Die Rohdaten können somit direkt nach der Erstellung zum Training des KI-Systems zum Anonymisieren von Daten verwendet werden.

Zweckmäßigerweise kann das Verfahren auf einem Rechnersystem ausgeführt unter Verwendung einer Artificial Intelligence runtime app bzw. einer AI runtime app, welche Machine Learning packages bzw. ML packages ausführen kann, durchgeführt werden. Dieses Rechnersystem kann die zuvor beschrieben Edge Device sein. Es kann so eine oftmals bereits vorhandene Hardware- und Softwareumgebung verwendet werden, so dass Entwicklungs- Einrichtungs-, Wartungs- und Anschaffungskosten gespart werden können.

Eine vorteilhafte Erweiterung des zuvor beschriebenen Verfahrens besteht in einem Verfahren zum Trainieren einer KI-Anwendung, mit den Schritten
a. Anonymisieren von Rohdaten unter Verwendung eines ersten Rechnersystems mit einem ersten Autoencoder, welcher mit dem zuvor beschriebenen Verfahren trainiert wurde,
b. Transferieren der anonymisierten Rohdaten über ein Netzwerk zu einem zweiten Rechnersystem,
c. Deanonymisieren der anonymisierten Rohdaten unter Verwendung des zweiten Rechnersystems mit einem zweiten Autoencoder, welcher mit einem zuvor beschriebenen Verfahren, und
d. Trainieren der KI-Anwendung mit den deanonymisierten Rohdaten.

Gemäß einer vorteilhaften Ausführungsform ist vorgesehen, dass das zweite Rechnersystem Teil einer Cloud-Architektur ist. Es wird so möglich, die Vorteile der elastischen Skalierungsmöglichkeiten eines Cloud-basierten Computer-Clusters bei gleichzeitig hoher Datensicherheit zu nutzen.

Das erste Rechnersystem kann eine Edge Device sein. Es kann sich um die gleiche Edge Device handeln, die zum Trainieren des KI-Systems zum Anonymisieren von Daten, mit anderen Worten also zum Trainieren des ersten Autoencoders und des zweiten Autoencoders, verwendet wurde.

Es ist dabei möglich, dass der zweite Encoder auf dem zweiten Rechnersystem abgespeichert ist. Mit anderen Worten kann der zweite Encoder insbesondere in einer Cloudarchitektur gespeichert sein. Es kann dann die Deanonymisierung in direkter Umgebung der Vorrichtung zur Datenanalyse bzw. der cloudbasierten ML- oder AI-Anwendung, die die Daten verwenden soll, vorgenommen werden. Entsprechend wird das Risiko für Datenlecks oder sonstige unbefugte Zugriffe auf die Rohdaten in nutzbarer Form weiter minimiert.

Mit dem beschriebenen Verfahren ist es möglich, ein KI-Modell in einer Cloudumgebung zu trainieren, wobei zu keinem Zeitpunkt nutzbare Rohdaten in der Cloud außerhalb der KI-Runtime verarbeitet oder gespeichert werden. Die KI-Runtime kann dabei ein proprietärer Docker-Container sein.

Ohne das über einen sicheren Kanal, beispielsweise über einen ML Package Store, bereitgestellte ML-Paket zur Deanonymisierung ist es dabei nicht möglich, die Daten sinnvoll zu nutzen. Das ML-Paket zur Deanonymisierung kann dabei den zweiten Autoencoder beinhalten, wobei der zweite Autoencoder zur Wiederherstellung der Nutzbarkeit der Daten verwendet werden kann.

Das erfindungsgemäße Verfahren erzeugt ein trainiertes KI-Modell, welches beispielsweise dazu verwendet werden kann, ein technisches Gerät zu betreiben. Im Betrieb des Geräts werden folglich die erhaltenen Daten, welche innerhalb eines vorgegebenen, zulässigen Rekonstruktionsfehlers liegen, dazu verwendet, ein Gerät mit einer Steuervorrichtung anzusteuern oder Daten von einem Gerät auszulesen und entsprechend auszuwerten, wie beispielsweise für eine Rekonstruktion von Messdaten, wie zuvor anhand von Bilddaten beschrieben.
Dem erfindungsgemäßen Verfahren können Betriebsdaten zum Betrieb des technischen Geräts bereitgestellt werden bzw. von einem entsprechenden Sensormittel erfasst werden.
Mit anderen Worten wird im erfindungsgemäßen Verfahren die trainierte Künstliche-Intelligenz-Anwendung mithilfe einer Steuervorrichtung dazu verwendet, ein mit dem KI-System verbundenes technisches Gerät zu betreiben.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: ein Flussdiagramm zur Veranschaulichung eines ersten Ausführungsbeispiels eines erfindungsgemäßen Verfahrens,
- Figur 2: ein Flussdiagramm zur Veranschaulichung eines zweiten Ausführungsbeispiels eines erfindungsgemäßen Verfahrens,
- Figur 3: einen schematischen Überblick über eine Hardware- und Netzwerkarchitektur, die zur Ausführung eines erfindungsgemäßen Verfahrens geeignet ist,
- Figur 4: eine schematische Darstellung eines Datenflusses gemäß eines Ausführungsbeispiels eines erfindungsgemäßen Verfahrens zum Trainieren eines KI-Systems zum Anonymisieren von Daten, und
- Figur 5: eine schematische Darstellung eines Datenflusses gemäß eines weiteren Ausführungsbeispiels eines erfindungsgemäßen Verfahrens.

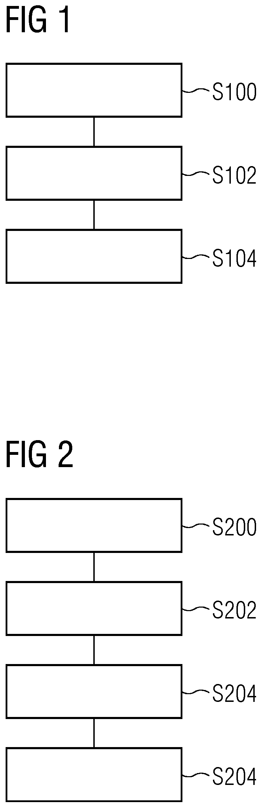

In der Figur 1 ist ein Flussdiagramm zur Veranschaulichung eines ersten Ausführungsbeispiels eines erfindungsgemäßen Verfahrens gezeigt. Das Verfahren kann entsprechend ein Verfahren zum Trainieren eines KI-Systems zum Anonymisieren von Daten sein, sowie zum Betrieb eines mit dem KI-System verbundenen technischen Geräts mit den erzeugten Daten bzw. dem trainierten KI-Modell verwendet werden.

In einem Schritt S100 werden ein erster Autoencoder und ein zweiter Autoencoder eines KI-Systems zum Anonymisieren von Daten mit Trainingsdaten trainiert, wobei die Trainingsdaten als Eingabedaten für den ersten Autoencoder verwendet werden, und wobei die Ausgabedaten des ersten Autoencoders als Eingabedaten für den zweiten Autoencoder verwendet werden.

In einem Schritt S102 wird ein Rekonstruktionsfehler zwischen den Trainingsdaten und den von dem zweiten Autoencoder ausgegebenen Ausgabedaten ermittelt. Der ermittelte Rekonstruktionsfehler kann dann mit einem vorgegebenen Referenzwert verglichen werden, oder es kann eine Differenz zwischen dem vorgegebenen Referenzwert und dem Rekonstruktionsfehler gebildet werden.

In einem Schritt S104 wird das Training beendet, wenn ein Maß für die Größe des Rekonstruktionsfehlers einen vorgegebenen Wert unterschreitet. Es kann hierzu das Ergebnis des zuvor durchgeführten Vergleichs oder die zuvor ermittelte Differenz ausgewertet werden. Wenn festgestellt wird, dass der Rekonstruktionsfehler noch zu groß ist, wenn mit anderen Worten also die von dem zweiten Autoencoder gelieferte Rekonstruktion der Trainingsdaten noch zu stark von den ursprünglichen Trainingsdaten abweicht, wird das Training fortgesetzt. Hierzu kann zu dem Schritt S100 des Verfahrens zurückgekehrt werden.

In der Figur 2 ist ein Flussdiagramm zur Veranschaulichung eines zweiten Ausführungsbeispiels eines erfindungsgemäßen Verfahrens gezeigt. Das Verfahren kann hier ein Verfahren zum Trainieren einer ML-Anwendung sein.

In einem Schritt S200 werden Rohdaten unter Verwendung eines ersten Rechnersystems mit einem ersten Autoencoder, welcher mit einem erfindungsgemäßen Verfahren, beispielsweise mit dem in Zusammenhang mit Figur 1 beschriebenen Verfahren, trainiert wurde, anonymisiert.

In einem Schritt S202 werden die anonymisierten Rohdaten über ein Netzwerk zu einem zweiten Rechnersystem transferiert.

In einem Schritt S204 werden die anonymisierten Rohdaten unter Verwendung eines zweiten Rechnersystems mit einem zweiten Autoencoder, welcher mit einem erfindungsgemäßen Verfahren, beispielsweise mit dem in Zusammenhang mit Figur 1 beschriebenen Verfahren, trainiert wurde, deanonymisiert.

In einem Schritt S206 wird sodann das KI-Modell mit den nun wieder deanonymisierten Rohdaten trainiert. Das KI-Modell kann so mit Daten hoher Auflösung bzw. Qualität trainiert werden, ohne, dass diese Daten während des Netzwerktransfers Sicherheitsrisiken ausgesetzt sind.

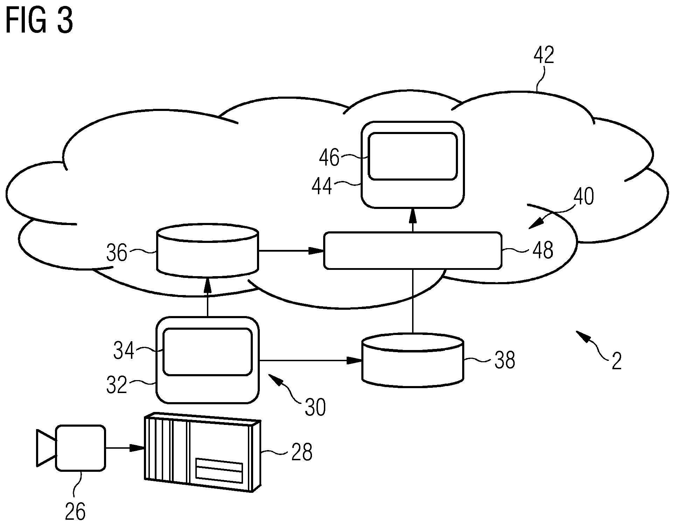

Figur 3 zeigt einen schematischen Überblick über eine Hardware- und Netzwerkarchitektur in Form eines KI-Systems 2, die zur Ausführung eines erfindungsgemäßen Verfahrens geeignet ist. Das erfindungsgemäße Konzept wird dabei anhand von Bilddaten dargestellt, kann aber auch auf andere Datentypen (z. B. Zeitreihen oder Tabellendaten) angewendet werden.

Der Datenfluss lässt sich dabei wie folgt beschreiben:
Eine Kamera fungiert als Datenquelle 26 und sammelt Bilder von einer nicht dargestellten Produktionslinie (z.B. für visuelle Qualitätsanwendungen). Die Edge Device 28, die auch als Edge-Gerät bezeichnet werden kann, stellt ein erstes Rechnersystem 30 dar und verarbeitet die Daten lokal. Sie hostet eine KI-Laufzeitanwendung (AI runtime app) 32, die ML-Pakete (ML package) 34 ausführen kann. Unter einem ML-Paket 34 wird dabei insbesondere ein Artefakt, das den als ML-Pipeline strukturierten Code für maschinelles Lernen enthält, verstanden. Die ML-Pipeline kann Module zur Datenvorverarbeitung, für das Training, für die Inferenz sowie für die Nachverarbeitung (post-processing) der Daten beinhalten. Ein solches ML-Paket 34 kann der erste Encoder sein, der dann für die Anonymisierung der Daten verwendet werden kann.
Statt der Kamera 26 als technisches Gerät kann in einem alternativen Ausführungsbeispiel, welches nicht dargestellt ist, beispielsweise auch ein Roboter als KI-Anwendung für eine Prozess-Steuerung mit Steuerungsdaten als Betriebsdaten mithilfe eines Autoencoders verwendet werden.

Die Edge Device 28 sendet die anonymisierten Daten dann an die Cloud 42 bzw. an den dort angeordneten Objektspeicher bzw. Datenspeicher 36. Die KI-Laufzeit (AI runtime app) 44, die ML-Pakete (ML package) 46 ausführen kann, kann auf einem zweiten Rechnersystem 40 wie z.B. einem ML-Trainingsdienst 48 in der Cloud, beispielsweise also auf einem von einem Drittanbieter angebotenen Dienst, ausgeführt werden. Das ML-Paket zur Datenentanonymisierung, welches von dem zweiten Autoencoder gebildet werden kann, kann dabei aus einem lokalen Repository bzw. aus einem lokalen Datenspeicher bzw. Programmspeicher 38 direkt im KI-Laufzeitcontainer bereitgestellt werden.

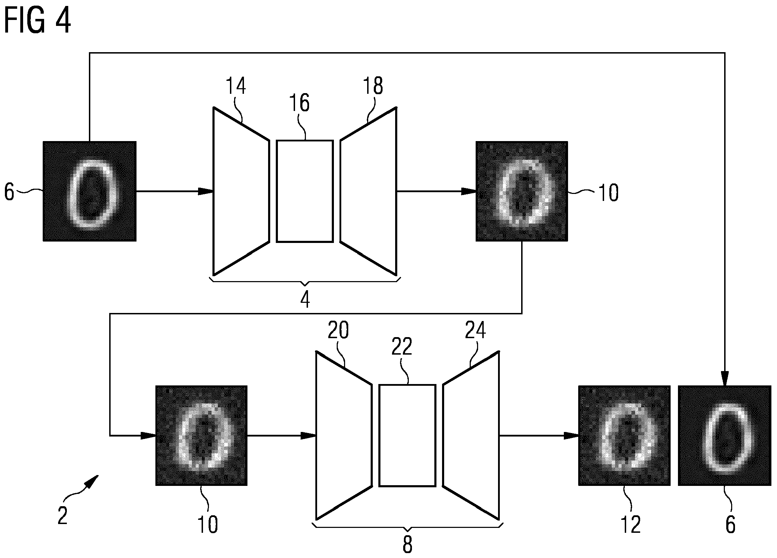

Figur 4 zeigt eine schematische Darstellung eines Datenflusses gemäß eines Ausführungsbeispiels eines erfindungsgemäßen Verfahrens zum Trainieren eines KI-Systems zum Anonymisieren von Daten. Zunächst werden Trainingsdaten 6 in einen ersten Autoencoder 4 eingegeben. Der erste Autoencoder 4 besteht dabei vereinfacht gesagt aus einem ersten Encoder 14, einem ersten latent space 16 und einem ersten Decoder 18. Die Trainingsdaten sind dabei als Bild mit einer relativ scharfen Darstellung visualisiert. Der erste Autoencoder 4 gibt erste Ausgabedaten 10 aus. Die Qualität der Ausgabedaten 10 ist von geringerer Auflösung bzw. verrauscht, was durch die im Vergleich zu den ursprünglichen Trainingsdaten 6 qualitativ schlechtere Darstellung der ersten Ausgabedaten 10 angedeutet wird. Die ersten Ausgabedaten 10 werden dann in den zweiten Autoencoder 8 eingegeben. Auch der zweite Autoencoder 8 weist dabei einen zweiten Encoder 20, einen zweiten latent space 22 und einen zweiten Decoder 24 auf.

Der zweite Autoencoder 8 gibt zweite Ausgabedaten 12 aus. Die Qualität der zweiten Ausgabedaten 12 variiert je nachdem, wie weit das Training bereits fortgeschritten ist. Im dargestellten Fall ist die Auflösung der zweiten Ausgabedaten 12 ähnlich niedrig wie die Auflösung der ersten Ausgabedaten 10. Die zweiten Ausgabedaten 12 werden mit den Trainingsdaten 6 verglichen und es wird ein Rekonstruktionsfehler ermittelt. Hierzu kann eine dist()-Funktion verwendet werden. Abhängig von dem ermittelten Rekonstruktionsfehler kann das Training fortgesetzt oder beendet werden.

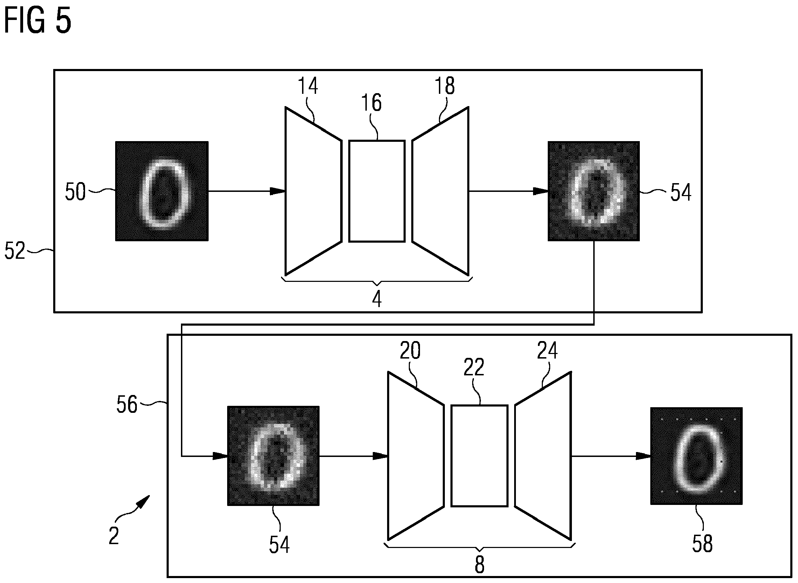

Figur 5 zeigt eine schematische Darstellung eines Datenflusses gemäß eines Ausführungsbeispiels eines erfindungsgemäßen Verfahrens zum Trainieren einer ML-Anwendung, wobei das Verfahren auf der Verwendung des zuvor trainierten ersten Autoencoders 4 und des gemeinsam mit dem ersten Autoencoder 4 trainierten zweiten Autoencoders 8 basiert.

Es werden nun Rohdaten 50 in den ersten Autoencoder 4 zur Verarbeitung eingegeben. Der erste Autoencoder 4 gibt anonymisierte Rohdaten 54 aus, welche in den zweiten Autoencoder 8 zur Weiterverarbeitung eingegeben werden. Der zweite Autoencoder 8 deanonymisiert die eingegebenen Daten und gibt die deanonymisierten Rohdaten 58 aus.

Der erste Autoencoder 4 kann dabei auf einem ersten Rechnersystem 52 abgespeichert sein bzw. von diesem ausgeführt werden, und der zweite Autoencoder 8 kann auf einem zweiten Rechnersystem 56 abgespeichert sein bzw. von diesem ausgeführt werden. Das erste Rechnersystem 52 ist dabei vorzugsweise in unmittelbarer Nähe des Erzeugungsorts der Rohdaten 50 angeordnet. Das zweite Rechnersystem 56 kann über eine nicht dargestellte Netzwerkverbindung mit dem ersten Rechnersystem 52 verbunden sein und/oder beispielsweise in eine Cloudarchitektur integriert sein.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 2: KI-System
- 4: erster Autoencoder
- 6: Trainingsdaten
- 8: zweiter Autoencoder
- 10: erste Ausgabedaten
- 12: zweite Ausgabedaten
- 14: erstes Encodermodul
- 16: erster Latent Space
- 18: erstes Decodermodul
- 20: zweites Encodermodul
- 22: zweiter Latent Space
- 24: zweites Decodermodul
- 26: Datenquelle
- 28: Edge Device
- 30: erstes Rechnersystem
- 32: AI runtime App
- 34: ML Package
- 36: Datenspeicher
- 38: Programmspeicher
- 40: zweites Rechnersystem
- 42: Cloud
- 44: AI runtime App
- 46: ML Package
- 48: ML Trainingsdienst
- 50: Rohdaten
- 52: erstes Rechensystem
- 54: anonymisierte Rohdaten
- 56: zweites Rechensystem
- 58: deanonymisierte Rohdaten

## Patentansprüche

1. Verfahren zum Trainieren eines Künstliche-Intelligenz-Systems (2) zum Anonymisieren von Daten, mit den Schritten:
a. Trainieren eines ersten Autoencoders (4) des Künstliche-Intelligenz-Systems (2) und eines zweiten Autoencoders (8) des Künstliche-Intelligenz-Systems (2) mit Trainingsdaten (6), wobei
i. Die Trainingsdaten (6) als Eingabedaten für den ersten Autoencoder (8) verwendet werden, und wobei
ii. Ausgabedaten (10) des ersten Autoencoders (4) als Eingabedaten des zweiten Autoencoders (8) verwendet werden,
b. Ermitteln eines Rekonstruktionsfehlers zwischen den Trainingsdaten (6) und Ausgabedaten (12) des zweiten Autoencoders (8), und
c. Beenden des Trainings, wenn ein Maß für die Größe des Rekonstruktionsfehlers einen vorgegebenen Wert unterschreitet.

2. Verfahren nach Anspruch 1, **dadurch gekennzeichnet, dass** der erste Autoencoder (4) und der zweite Autoencoder (8) jeweils ein Encodermodul (14, 20) und ein Decodermodul (18, 24) aufweisen.

3. Verfahren nach Anspruch 1 oder 2, **dadurch gekennzeichnet, dass** zum Bestimmen des Rekonstruktionsfehlers eine dist()-Funktion verwendet wird.

4. Verfahren nach einem der vorstehenden Ansprüche, **dadurch gekennzeichnet, dass** das Verfahren auf einer Edge Device (28) ausgeführt wird.

5. Verfahren nach einem der vorstehenden Ansprüche, **dadurch gekennzeichnet, dass** das Verfahren auf einem Rechnersystem (30) unter Verwendung einer Artificial Intelligence Runtime App (32), welche Machine Learning packages (34) ausführen kann, durchgeführt wird.

6. Verfahren nach dem vorhergehenden Anspruch, wobei der erste Autoencoder (4) mithilfe des ersten Rechnersystems (30) dazu verwendet wird, ein technisches Gerät mit Betriebsdaten zu betreiben.

7. Verfahren zum Trainieren einer Künstliche-Intelligenz-Anwendung, insbesondere einer Machine-Learning-Anwendung (46), mit den Schritten
a. Anonymisieren von Rohdaten (50) unter Verwendung eines ersten Rechnersystems (30) mit einem ersten Autoencoder (4), welcher mit einem Verfahren nach einem der Ansprüche 1 bis 5 trainiert wurde,
b. Transferieren der anonymisierten Rohdaten (54) über ein Netzwerk zu einem zweiten Rechnersystem (40),
c. Deanonymisieren der anonymisierten Rohdaten (54) unter Verwendung des zweiten Rechnersystems (40) mit einem zweiten Autoencoder (8), welcher mit einem Verfahren nach einem der Ansprüche 1 bis 5 trainiert wurde, und
d. Trainieren der Künstliche-Intelligenz-Anwendung mit den deanonymisierten Rohdaten (58).

8. Verfahren nach Anspruch 7, **dadurch gekennzeichnet, dass** das zweite Rechnersystem (40) Teil einer Cloud-Architektur (42) ist.

9. Verfahren nach einem der Ansprüche 7 oder 8, **dadurch gekennzeichnet, dass** der zweite Encoder (8) auf dem zweiten Rechnersystem (40) abgespeichert ist.

10. Verfahren nach einem der Ansprüche 7 bis 9, wobei die trainierte Künstliche-Intelligenz-Anwendung mithilfe einer Steuervorrichtung dazu verwendet wird, ein technisches Gerät mit bereitgestellten oder erfassten Betriebsdaten zu betreiben.

11. Computerprogramm, umfassend Befehle, die bei der Ausführung des Programms durch einen Computer diesen veranlassen, ein Verfahren nach einem der Ansprüche 1 bis 6 auszuführen.

12. Maschinenlesbares Speichermedium, auf dem das Computerprogramm nach Anspruch 11 gespeichert ist.
